# EUROPÄISCHE PATENTSCHRIFT

(11) **EP 1 354 902 B1**
(45) Veröffentlichungstag und Bekanntmachung des Hinweises auf die Patenterteilung: **31.01.2007**
(21) Anmeldenummer: 03007723.4
(22) Anmeldetag: 04.04.2003
(51) Int. Cl.: C08G 18/08, C08G 18/61

(54) **Wässrige Polysiloxan-Polyurethan-Dispersion, ihre Herstellung und Verwendung in Beschichtungsmitteln**
Aqueous polysiloxane-polyurethane dispersion, its preparation and use in coatings
Dispersion de polysiloxane-polyuréthane aqueuse, sa préparation et son utilisation pour des revêtements

(30) Priorität: 17.04.2002 DE 10216896
(43) Veröffentlichungstag der Anmeldung: 22.10.2003
(73) Patentinhaber: Goldschmidt GmbH, 45127 Essen (DE)
(72) Erfinder: Hallack, Markus, 46240 Bottrop (DE); Reusmann, Gerhard, Dr., 45259 Essen (DE)

(56) Entgegenhaltungen:
- WO-A-00/52080
- WO-A-95/21206
- WO-A-96/10595
- DE-A- 19 941 365

## Beschreibung

Die Erfindung betrifft wässrige Dispersionen von Polysiloxan-Polyurethanen auf Basis von ausgewählten, im Wesentlichen difunktionellen Ausgangsmaterialien, ihre Herstellung und Verwendung zur Herstellung von Beschichtungsmitteln und ein Beschichtungsmittel, welches als wesentliche Bindemittelkomponente Polysiloxan-Polyurethane der genannten Art enthält. Die erfindungsgemäßen Beschichtungsmittel eignen sich insbesondere als Soft-Feel-Lack.

Moderne, wässrige Bindemittel sind in der Lage, in vielen Anwendungen organisch gelöste Bindemittel zu substituieren. Dies gilt vor allem für solche Bereiche, in denen wässrige Bindemittel spezifische Vorteile aufweisen können, wie z. B. in der Elektrotauchlackierung.

Für Anwendungen mit sehr speziellen Anforderungsprofilen, wie z. B. die Lackierung bzw. Beschichtung von Kunststoffen mit Soft-Feel-Effekt-Lacken, fehlen bis jetzt überzeugende wässrige Bindemittel, die den gestellten Anforderungen gerecht werden.

Das von den organisch gelösten Soft-Feel-Lacken auf Polyurethanbasis (beispielsweise WO-92/1626 oder JP-A-279 620 mit der Veröffentlichungsnummer J63132-919-A) vorgegebene Eigenschaftsniveau, insbesondere bezüglich des Soft-Feel-Effekts, der Lösemittelbeständigkeit sowie der Filmmechanik und der Haftung auf dem Substrat, wird von wässrigen Systemen nicht erreicht. Vor allem die Kombination eines guten Soft-Feel-Effekts mit einer zufriedenstellenden Lösemittelbeständigkeit der Beschichtung ist mit wässrigen Produkten des Standes der Technik nicht möglich.

Aus der EP-A-578 940 sind diesbezüglich wasserdispergierbare Polyurethanpolyole auf Basis verzweigter Polyesterpolyole bekannt.

Die Verwendung von wässrigen Polyester-Polyurethan-Dispersionen wird in der EP-A-669 352 beschrieben. Auch hier wird der Soft-Feel-Effekt erst durch Zugabe von speziellen Mattierungsmitteln zu der Polyester-Polyurethan-Dispersion erzielt.

Es ist deshalb die der Erfindung zugrundeliegende Aufgabe, wässrige Bindemittel zur Verfügung zu stellen, die für hochelastische Lacke, Beschichtungen und Dichtmassen, insbesondere für Soft-Feel-Lacke, geeignet sind und einen guten Soft-Feel-Effekt mit guter Filmmechanik und Haftung sowie einer zufriedenstellenden Lösemittelbeständigkeit verbinden und darüber hinaus auch möglichst wenige flüchtige, organische Substanzen enthalten, um auch hohen Anforderungen bezüglich der Umweltverträglichkeit gerecht werden zu können.

Diese Aufgabe konnte mit der Bereitstellung der nachstehend näher beschriebenen wässrigen Polysiloxan-Polyurethan-Dispersionen bzw. den Beschichtungsmitteln auf Basis dieser Dispersionen gelöst werden.

Gegenstand der Erfindung sind in einer ersten Ausführungsform wässrige Dispersionen von Polysiloxan-Polyurethanen mit einer Säurezahl von 5 bis 100 mg KOH/g Polysiloxan-Polyurethan-Feststoff, einem Gehalt an Hydroxylgruppen von 0,25 bis 6,5 Gew.-% und an Urethangruppen (berechnet als -NH-CO-O-) von 2,0 bis 25,0 Gew.-%, jeweils bezogen auf Polysiloxan-Polyurethan-Feststoff, die dadurch gekennzeichnet sind, dass die Polyurethane ggf. zumindest teilweise mit Basen neutralisierte Umsetzungsprodukte darstellen von
a) insgesamt 3 bis 25 Gew.-% mindestens eines linearen Polydimethylsiloxandiols des Molekularmassenbereiches 1.500 bis 10.000,
b) insgesamt 15 bis 90 Gew.-% mindestens eines weiteren difunktionellen Polyols, ausgewählt aus der Gruppe bestehend aus
   i) Hydroxylgruppen aufweisenden Polycarbonaten des Molekularmassenbereichs 400 bis 6.000,
   ii) Hydroxylgruppen aufweisenden Polyetherpolyolen des Molekularmassenbereichs 350 bis 3.500 und
   iii) Estergruppen aufweisenden, durch Hydrierung der Carboxylgruppen zu Hydroxylgruppen, Alkoxylierung der Carboxylgruppen oder Veresterung der Carboxylgruppen mit niedermolekularen Diolen von Dimerfettsäuren erhaltenen Polyesterpolyolen und
   iiii) Hydroxylgruppen aufweisenden linearen Polyesterpolyolen des Molekularmassenbereichs 500 bis 4.000,
c) insgesamt 1 bis 10 Gew.-% wenigstens einer Säurekomponente, bestehend aus
   i) Hydroxycarbonsäuren,
   ii) Aminocarbonsäuren,
   iii) Aminosulfonsäuren oder
   iv) Alkalisalzen derartiger Säuren,
d) insgesamt 0 bis 20 Gew.-% wenigstens einer niedermolekularen Komponente, bestehend aus mindestens einer, mindestens zwei Hydroxyl- und/oder Aminogruppen enthaltenden Verbindung des Molekularmassenbereichs 60 bis 300,
e) insgesamt 0 bis 20 Gew.-% wenigstens eines hydrophilen, Ethylenoxideinheiten aufweisenden ein- oder zweiwertigen Alkohols des Molekularmassenbereichs 350 bis 3.000,
f) insgesamt 5 bis 50 Gew.-% wenigstens einer Polyisocyanatkomponente, bestehend aus mindestens einem organischen Polyisocyanat des Molekularmassenbereichs 168 bis 1.000, wobei mindestens 50 Gew.-% der Polyisocyanatkomponente linearaliphatische Diisocyanate des Molekularmassenbereichs 168 bis 300 darstellen,
wobei sich die genannten Prozentangaben zu 100 Gew.-% der Polyurethananteile der Polysiloxan-Polyurethan-Feststoffe ergänzen.

Der Einbau höhermolekularer Polydimethylsiloxandiole mit Molekularmassen oberhalb 1.500 g/mol gelingt dabei nach dem Stand der Technik nicht, da die starke Unverträglichkeit mit den organischen Reaktionskomponenten nur eine unzureichende Umsetzung ermöglicht. Da niedrigmolekulare Polydimethylsiloxane unterhalb einer Molekularmasse von 1.500 g/mol keine Soft-Feel-Effekte aufzeigen, besteht weiterhin die Aufgabe dieser Erfindung in der Entwicklung einer geeigneten Synthese für Polysiloxan-Polyurethan-Dispersionen.

Gegenstand dieser Erfindung ist somit weiterhin ein Verfahren zur schrittweisen Herstellung dieser Dispersionen, das dadurch gekennzeichnet ist, dass man in einem ersten Schritt ein Isocyanat-funktionelles Prepolymer (I) aus den Komponenten a), b), c) und f) sowie d) und g) sofern jeweils anwesend herstellt, wobei das NCO/OH-Verhältnis 1,8 : 1 bis 3,0 : 1 beträgt. Das erhaltene Prepolymer (I) wird dann durch Umsetzung mit Komponente b) und/oder d) sofern anwesend zu einem Isocyanat-funktionellen Prepolymer (II) umgesetzt, wobei das NCO/OH-Verhältnis 1,2 : 1 bis 1,6 : 1 beträgt. Durch Reaktion mit weiterem Polyol als Komponente b) und/oder d) wird daraufhin zum finalen Hydroxylgruppen haltigen Polysiloxan-Polyurethan-Polymer umgesetzt, wobei keine NCO-Gruppen mehr nachweisbar sind, welches durch Zugabe in Wasser in Gegenwart des Neutralisationsmittels dispergiert wird.

Gegenstand der Erfindung ist auch die Verwendung dieser Dispersionen zur Herstellung von wässrigen Beschichtungsmitteln auf Basis von in Wasser dispergierten Bindemitteln und Vernetzerharzen, ausgewählt aus der Gruppe bestehend aus Aminoplastharzen, gegebenenfalls hydrophil modifizierten blockierten Polyisocyanaten und ggf. hydrophil modifizierten Polyisocyanaten mit freien Isocyanatgruppen.

Gegenstand der Erfindung sind auch wässrige, ggf. die üblichen Hilfs- und Zusatzstoffe enthaltenden Beschichtungsmittel, welche als Bindemittel eine Kombination aus
A) einer Polyolkomponente mit
B) einem Vernetzerharz, ausgewählt aus der Gruppe bestehend aus Melaminharzen, ggf. hydrophil modifizierten blockierten Polyisocyanaten und ggf. hydrophil modifizierten Polyisocyanaten mit freien Isocyanatgruppen, enthalten, das dadurch gekennzeichnet ist, dass die Polyolkomponente A) zu 25 bis 100 Gew.-% aus einem Hydroxylgruppen aufweisenden Polysiloxan-Polyurethan der erfindungsgemäß dispergiert vorliegenden Art und zu 0 bis 75 Gew.-% aus anderen, von diesen Polysiloxan-Polyurethanen verschiedenen Bindemitteln besteht.

Die erfindungsgemäßen Polysiloxan-Polyurethan-Dispersionen weisen im Allgemeinen Festkörpergehalte von 15 bis 68, vorzugsweise 33 bis 60 Gew.-% und bei 23 °C rotationsviskosimetrisch bestimmte Viskositäten von 10 bis 20.000, vorzugsweise 50 bis 5.000 mPas auf. Der pH-Wert liegt im Allgemeinen zwischen 5 und 10, vorzugsweise bei 6 bis 8 und wird gemäß DIN 53 785 nach Verdünnen mit destilliertem Wasser auf einen Feststoffgehalt von 10 Gew.-% bestimmt. Der Begriff "Dispersion" soll im Übrigen im Rahmen der Erfindung sowohl echte wässrige Dispersionen als auch wässrige Lösungen umfassen. Die Frage, ob es sich um Dispersionen oder Lösungen handelt, ist insbesondere vom Gehalt an salzartigen Gruppen und von der Molekularmasse der Polymeren abhängig.

Die in den Dispersionen als disperse Phase vorliegenden Polysiloxan-Polyurethane weisen insbesondere, bezogen auf Feststoff, einen Gehalt an Urethangruppen (-NH-CO-O) von 2,0 bis 25,0, vorzugsweise 4,0 bis 19,0 Gew.-%, eine Säurezahl von 5 bis 100 mg KOH/g, vorzugsweise von 8 bis 40 mg KOH/g, wobei sich die Säurezahl sowohl auf freie Säuregruppen als auch auf mit Basen neutralisierte Säuregruppen des Feststoffs bezieht und einen Gehalt an Hydroxylgruppen von 0,3 bis 6,5, vorzugsweise 0,5 bis 3,5 Gew.-% auf. Die Wasserverdünnbarkeit der Polysiloxan-Polyurethane ist im Wesentlichen auf ihren Gehalt an den genannten anionischen Gruppen zurückzuführen.

Bei der Ausgangskomponente a) handelt es sich im Wesentlichen um lineare, insbesondere α, ω-Dihydroxyalkyl, Polydimethylsiloxane der Molekularmasse 1.500 bis 10.000, vorzugsweise 2.000 bis 4.000, besonders vorzugsweise 2.000 bis 3.000 g/mol.

Der Begriff "linear" soll bedeuten, dass die Verbindungen im statistischen Mittel pro Molekül höchstens 0,5, vorzugsweise weniger als 0,3 und besonders bevorzugt weniger als 0,1 Verzweigungsstellen aufweisen, d. h., dass die (mittlere) Hydroxylfunktionalität bei maximal 2,5, vorzugsweise bei maximal 2,3 und besonders bevorzugt bei maximal 2,1 liegt. Der Begriff "im Wesentlichen difunktionell" soll bedeuten, dass die Verbindungen im statistischen Mittel pro Molekül höchstens 0,1, vorzugsweise keine Verzweigungsstellen aufweisen, d. h., dass die mittlere Hydroxylfunktionalität bei maximal 2,1, vorzugsweise bei 2,0 liegt.

Bei den Angaben bezüglich der Molekularmasse der Ausgangskomponenten handelt es sich hier und auch vor- und nachstehend stets um die aus Hydroxylgruppengehalt und Hydroxylfunktionalität errechenbare mittlere Molekularmasse.

Die Polydimethylsiloxanpolyole sind bevorzugt Hydroxyalkylendfunktionelle lineare Polydimethylsiloxane mit einer mittleren Molekularmasse von 1.500 bis 3.000, wie beispielsweise Tegomer® H-Si 2111 und Tegomer® H-Si 2311 (Goldschmidt AG). Ebenfalls geeignet sind Hydroxy(polycaprolacton)-modifizierte Polydimethylsiloxane, wie beispielsweise Tegomer® H-Si 6440 (Goldschmidt AG).

Besonders bevorzugt ist das lineare Hydroxyalkyl-funktionelle Polydimethylsiloxan Tegomer® H-Si 2311.

Entsprechende Aminogruppen-haltige Polydimethylsiloxane wie beispielsweise Tegomer® A-Si 2322 (Goldschmidt AG) lassen sich nach der erfindungsgemäßen Synthese ebenfalls umsetzen, ergeben aber weniger witterungsstabile Beschichtungen.

Die entsprechenden Silanol-funktionellen (Si-OH) Polydimethylsiloxane sind aufgrund der geringeren Reaktivität gegenüber Isocyanaten weniger bevorzugt.

Ebenfalls, aber nicht bevorzugt, sind selbstverständlich auch lineare funktionelle Polydiphenyl-, Polymethylphenyloder Polyalkyl-Siloxane, beziehungsweise auch deren Copolymerisate einsetzbar.

Bei der Ausgangskomponente b) handelt es sich um difunktionelle Polyole, ausgewählt aus der Gruppe bestehend aus
i) Hydroxygruppen aufweisende Polycarbonate des Molekularmassenbereiches 400 bis 6.000,
ii) Hydroxygruppen aufweisende Polyetherpolyole des Molekularmassenbereiches 350 bis 3.500 und vorzugsweise mit weniger als 30 Gew.-%. an Ethylenoxideinheiten, bezogen auf alle in Form von Polyetherketten vorliegende Alkylenoxideinheiten
iii) Estergruppen aufweisenden, durch Hydrierung der Carboxylgruppen zu Hydroxylgruppen, Alkoxylierung der Carboxylgruppen oder Veresterung der Carboxylgruppen mit niedermolekularen Diolen von Dimerfettsäuren erhaltenen Polyesterpolyolen und
iiii) Hydroxylgruppen aufweisenden linearen Polyesterpolyolen der Molekularmasse 500 bis 4.000.

Die Herstellung der Polyesterpolyole wird in EP-A-669 352 beschrieben.

Geeignete Polycarbonatpolyole werden beispielsweise erhalten, indem Kohlensäurederivate, wie beispielsweise Diphenylcarbonat oder Phosgen mit Alkoholen, vorzugsweise Diolen, umgesetzt werden. Geeignete Diole sind beispielsweise bei Ausgangskomponente a2) beschrieben.

Geeignete Polyetherpolyole sind insbesondere die Ethoxylierungs- und/oder Propoxylierungsprodukte von Wasser oder von Diolen der bereits als Ausgangskomponente a2) beispielhaft genannten Art mit der Maßgabe, dass der Ethylenoxidgehalt, bezogen auf alle eingebauten Alkylenoxidgruppen, unter 30 Gew.-% liegt.

Ganz besonders bevorzugte Polyole b) sind difunktionelle Polyesterdiole der Molekularmasse 750 bis 4.000 sowie difunktionelle Polycarbonatpolyole der Molekularmasse 750 bis 4.000.

Bei der Ausgangskomponente c) handelt es sich um mindestens eine Hydroxycarbonsäure und/oder Aminocarbonsäure und/oder Aminosulfonsäure und/oder Hydroxysulfonsäure der beispielsweise in US-PS-3 479 310 genannten Art. Zu den bevorzugten Komponenten c) gehören 2,2-Bis-(hydroxymethyl)-alkanmonocarbonsäuren mit insgesamt 5 bis 8 Kohlenstoffatomen, d. h. Verbindungen der allgemeinen Formel 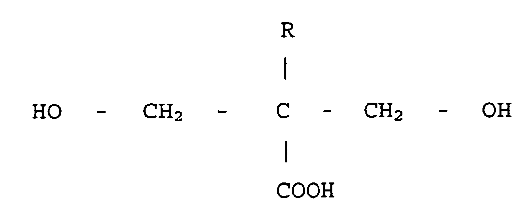 in welcher
- R: für einen Alkylrest mit 1 bis 4 Kohlenstoffatomen steht.

Ganz besonders bevorzugt als Komponente c) sind 2,2-Dimethylolpropionsäure und 2,2-Dimethylolbuttersäure.

Wie bereits oben angedeutet, ist es auch möglich, anstelle der freien Säure die entsprechenden Alkalisalze einzusetzen, vorausgesetzt, die Salze sind mit den übrigen Aufbaukomponenten ausreichend verträglich.

Bei der Ausgangskomponente d) handelt es sich um mindestens zwei Hydroxyl- und/oder Aminogruppen enthaltende Verbindungen der Molekularmasse 60 bis 300. Geeignet sind beispielsweise Ethylenglykol, Propylenglykol, Neopentylglykol, Butandiol, Hexandiol, Cyclohexandimethanol, Diethylenglykol, Dipropylenglykol, Trimethylolpropan, 1,4-Cyclohexandiol, Glycerin, Pentaerythrit, Aminoethanol, Aminoisopropanol, N,N-Dimethyl-1,3-diaminopropan und Gemische dieser und auch anderer entsprechender Verbindungen. Ebenfalls geeignet sind niedermolekulare Umsetzungsprodukte der genannten Verbindungen mit Ethylenoxid und/oder Propylenoxid und/oder ε-Caprolacton.

Bevorzugte Komponente d) sind niedermolekulare Diole und Triole der Molekularmasse 90 bis 150, wie beispielsweise 1,4-Butandiol, 1,6-Hexandiol, Neopentylglykol, Diethylenglykol, Glycerin und/oder Trimethylolpropan.

Bevorzugtes Polyol d) zur Herstellung des Prepolymer (I) ist dabei ein dihydroxyfunktionelles Polyol wie beispielsweise 1,4-Butandiol, bevorzugtes Polyol d) bei der weiteren Umsetzung zum Prepolymer (II) ist ein trifunktionelles Polyol wie beispielsweise Trimethylolpropan.

Bei der Ausgangskomponente e) handelt es sich vorzugsweise um nichtionisch hydrophile Polyethylenglykole, die ein oder zwei Hydroxylgruppen aufweisen. Vorzugsweise handelt es sich hierbei um 1- oder 2-wertige Polyetheralkohole des Molekularmassenbereichs 350 bis 3.000, wie sie in an sich bekannter Weise durch Alkoxylierung von 1- oder 2-wertigen Alkoholen als Startermoleküle erhalten werden, wobei als Alkylenoxide Ethylenoxid oder Gemische aus Ethylenoxid mit bis zu 40 Gew.-%, bezogen auf das Gesamtgewicht der Alkylenoxide, an Propylenoxid zum Einsatz gelangen.

Ein Beispiel für Ausgangskomponente e) ist Tegomer® D3403 (Goldschmidt AG).

Bei der Ausgangskomponente f) handelt es sich vorzugsweise um lineare aliphatische Diisocyanate des Molekularmassenbereichs 168 bis 1.000, insbesondere 168 bis 300 wie beispielsweise Hexamethylendiisocyanat, 1,11-Undecandiisocyanat oder 1,12-Dodecandiisocyanat. Als Ausgangskomponente f) ebenfalls, jedoch weniger bevorzugt geeignet sind Gemische derartiger linearer aliphatischer Diisocyanate mit anderen Diisocyanaten wie beispielsweise Isophorondiisocyanat, 2,4-Diisocyanatotoluol oder auch mit "Lackpolyisocyanaten" auf Basis von Hexamethylandiisocyanat der an sich bekannten Art mit einer maximalen Molekularmasse von 1.000. Die Ausgangskomponente f) besteht jedoch zumindest zu 50 Gew.-% aus linearen aliphatischen Diisocyanaten der eingangs erwähnten Art.

Geeignete Lösungsmittel zur Herstellung der Polysiloxan-Polyurethan-Dispersionen sind beispielsweise N-Methylpyrrolidon, Methoxyhexanon, Diethylenglykoldimethylether, Methylethylketon, Methylisobutylketon, Aceton, Xylol, Toluol, Butylacetat, Methoxypropylacetat bzw. Gemische dieser oder anderer Lösemittel. Die verwendeten organischen Lösemittel können vor, während oder nach dem Dispergierschritt ganz oder teilweise, ggf. azeotrop und/oder durch Anlegen eines Vakuums bzw. eines verstärkten Inertgasstromes, aus dem Reaktionsgemisch entfernt werden.

Geeignete Katalysatoren für die Urethanisierungsreaktion, d. h. die Umsetzung der Komponente a) bis f), können beispielsweise sein: Triethylamin, Zinn-II-octoat, Dibutylzinnoxid, Dibutylzinndilaurat und andere gebräuchliche Katalysatoren.

Geeignete Basen zur Neutralisation der zunächst eingebauten Säuregruppen sind beispielsweise Ammoniak, N-Methylmorpholin, Triethylamin, Dimethylethanolamin, Methyldiethanolamin, Morpholin, Dimethylisopropanolamin, 2-Amino-2-methyl-1-propanol bzw. Gemische dieser und anderer Neutralisationsmittel. Ebenfalls geeignet, jedoch weniger bevorzugt als Neutralisationsmittel, sind Natriumhydroxid, Lithiumhydroxid und Kaliumhydroxid.

Bevorzugte Neutralisationsmittel sind Ammoniak, Triethylamin, Dimethylethanolamin, Methyldiethanolamin und Dimethylisopropanolamin.

Die Herstellung der Dispersion erfolgt beispielsweise durch Umsetzung von 3,0 bis 25,0, vorzugsweise 5,0 bis 15,0 Gew.-% der Ausgangskomponente a) mit 15,0 bis 90,0, vorzugsweise 20,0 bis 70,0 Gew.-% der Ausgangskomponente b), 1,0 bis 10,0, vorzugsweise 2,0 bis 7,0 Gew.-% der Ausgangskomponente c), 0 bis 20,0, vorzugsweise 0,5 bis 10,0 Gew.-% der Ausgangskomponente d) und 0 bis 20,0, vorzugsweise 0 bis 10,0 Gew.-% der Ausgangskomponente e) mit 5,0 bis 50,0, vorzugsweise 7,0 bis 30,0 Gew.-% der Ausgangskomponente f), wobei sich die zu a) bis f) gemachten Prozentangaben zu 100 Gew.-% der Polyurethananteile der Polysiloxan-Polyurethan-Feststoffe ergänzen, in 40- bis 100-, vorzugsweise 85- bis 100 %iger, organischer Lösung (100 %ig = lösungsmittelfrei), wobei in einem ersten Schritt ein Isocyanat-funktionelles Prepolymer (I) aus den Komponenten a), b), c) und f) sowie d) und g) sofern anwesend in Gegenwart eines Katalysators hergestellt wird, das dadurch gekennzeichnet ist, dass das NCO/OH-Verhältnis 1,8 : 1 bis 3,0 : 1, bevorzugt 2,0 : 1 bis 2,5 : 1, beträgt. Das erhaltene Prepolymer (I) wird dann durch Umsetzung mit der Komponente d) sofern anwesend zu einem Isocyanat-funktionellen Prepolymer (II) umgesetzt, das dadurch gekennzeichnet ist, dass das NCO/OH-Verhältnis 1,2 : 1 bis 1,6 : 1 beträgt.

Durch Reaktion mit gegebenenfalls weiterem Polyol als Komponente b) und/oder d) wird daraufhin zum finalen Hydroxylgruppen-haltigen Polysiloxan-Polyurethan-Polymer umgesetzt, das dadurch gekennzeichnet ist, dass praktisch keine NCO-Gruppen mehr nachweisbar sind.

Bei dieser Umsetzung wird im Allgemeinen unter Einhaltung eines Äquivalentverhältnisses von gegenüber Isocyanatgruppen reaktionsfähigen Gruppen zu Isocyanatgruppen von 1,2 : 1 bis 2,5 : 1, vorzugsweise 1,4 : 1 bis 2,0 : 1 gearbeitet, so dass letztendlich Umsetzungsprodukte mit dem o. g. Hydroxylgruppengehalt resultieren. Gegebenenfalls im Reaktionsgemisch vorliegende, zur Überführung in anionischen Gruppen bestimmte Carboxylgruppen sind hierbei nicht als "gegenüber Isocyanatgruppen reaktionsfähig" anzusehen.

Im Anschluss an die genannte Umsetzung wird das Reaktionsgemisch in Wasser dispergiert bzw. gelöst, wobei ggf. in das Reaktionsgemisch eingeführte Säuregruppen während der Umsetzung oder vor bzw. während des Dispergierschrittes durch Zugabe eines Neutralisationsmittels zu 25 bis 100, vorzugsweise zu 45 bis 100 % in Salzgruppen überführt worden. Ein Einbau von anionischen Gruppen auf diese Weise erübrigt sich selbstverständlich, wenn als Aufbaukomponente c) bereits Salze, insbesondere Alkalisalze, von geeigneten Amino- bzw. Hydroxycarbon- bzw. -sulfonsäuren zum Einsatz gelangen.

Zur Durchführung des Dispergierschrittes kann alternativ das Wasser-/Neutralisationsmittelgemisch zum Harz, das Harz zum Wasser-/Neutralisationsmittelgemisch oder das Harz/Neutralisationsmittelgemisch zum Wasser gegeben werden. Unter "Harz" ist hierbei entweder das lösungsmittelfrei hergestellte Polysiloxan-Polyurethan oder seine Lösung in einem der beispielhaft genannten Hilfslösungsmittel zu verstehen. Der Dispergierschritt erfolgt im Allgemeinen innerhalb des Temperaturbereichs von 20 bis 100, vorzugsweise 40 bis 100 °C. Die Dispergierbarkeit der Polysiloxan-Polyurethane in Wasser kann gewünschtenfalls durch Mitverwendung von externen Emulgatoren beim Dispergieren verbessert werden.

Die erfindungsgemäßen Polysiloxan-Polyurethan-Dispersionen weisen im Allgemeinen einen Gehalt an organischen Lösungsmitteln von unter 15 und bevorzugt unter 10 Gew.-% auf.

Den erfindungsgemäßen Dispersionen können im Anschluss an ihre Herstellung zur Erzielung bestimmter Eigenschaften weitere organische Lösungsmittel, insbesondere alkoholische Lösungsmittel wie beispielsweise Ethanol, n-Butanol, n-Octanol, Butyldiglykol, Ethyldiglykol, Methyldiglykol oder Methoxypropanol, zugesetzt werden.

Die erfindungsgemäßen Dispersionen stellen wässrige Bindemittelkomponenten für Beschichtungsmittel auf Basis von in Wasser dispergierten Polyhydroxylverbindungen und Vernetzerharzen dar. Hierbei können die erfindungsgemäßen Dispersionen als alleinige Bindemittel oder aber auch in Abmischung mit wässrigen Dispersionen anderer Bindemittel zum Einsatz gelangen. Die Polyolkomponente der erfindungsgemäßen Beschichtungsmittel besteht demzufolge, bezogen auf Feststoff, zu 25 bis 100 Gew.-% aus Polysiloxan-Polyurethanen der erfindungsgemäßen Art und zu 0 bis 75 Gew.-% aus anderen, in Wasser dispergierbaren oder löslichen Bindemitteln. Als andere Bindemittel sind insbesondere an sich bekannte, in Wasser dispergierbare, gegebenenfalls Hydroxylgruppen aufweisende Polyesterharze, Polyacrylatharze oder Polyurethanharze, die sich bezüglich ihrer chemischen Zusammensetzung von den erfindungsgemäßen Polysiloxan-Polyurethanen unterscheiden, zu verstehen. Bevorzugt sind dabei Polyurethanharze, wie sie beispielsweise in den in der DE-A-26 51 506 beschriebenen PUR-Dispersionen enthalten sind. Diese Polyurethanharze enthalten vorzugsweise keine Hydroxylgruppen, sind linear aufgebaut und haben ein aus der Stöchiometrie der zu ihrer Herstellung eingesetzten Ausgangsmaterialien berechenbares Molekulargewicht Mn (Zahlenmittel) von mindestens 15.000. Sie sind anionisch und/oder nichtionisch-hydrophil modifiziert. Bevorzugte Komponente A) sind Dispersionen, die, bezogen auf Feststoff, 80 bis 100 Gew.-% an Polysiloxan-Polyurethanen der erfindungsgemäßen Art und 0 bis 20 Gew.-% der bevorzugten Polyurethane enthalten.

Geeignete Vernetzerharze B) sind Aminoplastharze, ggf. hydrophil modifzierte Polyisocyanate mit blockierten Isocyantgruppen und ggf. hydrophil modifizierte Polyisocyanate mit freien Isocyanatgruppen.

Geeignete Aminoplastharze sind beispielsweise wasserverdünnbare bzw. -dispergierbare Melamin- bzw. Harnstoff-Formaldehyd-Kondensationsprodukte, wie sie z. B. bei D. H. Solomon, The Chemistry of Organic Filmformers, S. 235 ff, John Wiley & Sons, Inc., New York, 1967, beschrieben sind. Die Melaminharze können jedoch auch ganz oder teilweise durch andere vernetzende Aminoplaste, wie sie beispielsweise in "Methoden der organischen Chemie" (Houben-Weyl), Bd. 14 Teil 2, 4. Auflage, Georg Thieme Verlag, Stuttgart 1963, S. 319 ff, beschrieben sind, ersetzt werden.

Ebenfalls geeignete Vernetzerharze sind blockierte Polyisocyanate, beispielsweise auf Basis von Isophorondiisocyanat, Hexamethylendiisocyanate, 1,4-Diisocyanatcyclohexan, Dicyclhexylmethandiisocyanat, 1,3-Diisocyanatobenzol, 1,4-Diisocyanatobenzol, 2,4-Diisocyanato-1-methylbenzol, 1,3-Diisocyanato-2-methylbenzol, 1,3-Bisisocyanatomethylbenzol, 2,4-Bisisocyanatomethyl-1,5-dimethyl-Benzol, Bis(4-isocyanatophenyl)-propan, Tris-(4-isocyanatophenyl)-methan, Trimethyl-1,6-diisocyanatohexan oder blockierte "Lackpolyisocyanate" wie Biuretgruppen aufweisende Polyisocyanate auf Basis von 1,6-Diisocyanatohexan, Isocyanuratgruppen aufweisende Polyisocyanate auf Basis von 1,6-Diisocyanatohexan oder Urethangruppen aufweisende Lackpolyisocyanate auf Basis von 2,4- und/oder 2,6-Diisocyanatotoluol oder Isophorondiisocanat einerseits und niedermolekularen Polyhydroxylverbindungen wie Trimethylolpropan, den isomeren Propandiolen oder Butandiolen oder beliebigen Gemischen derartiger Polyhydroxylverbindungen andererseits, jeweils mit blockierten Isocyanatgruppen.

Ebenfalls geeignet sind beispielsweise durch Salzgruppen oder Polyetherstrukturen hydrophilierte, blockierte Polyisocyanate.

Geeignete Blockierungsmittel für diese Polyisocyanate sind beispielsweise einwertige Alkohole wie Methanol, Ethanol, Butanol, Hexanol, Benzylalkohol, Oxime wie Methylethylketoxim, Lactame wie ε-Caprolactam, Phenole oder CH-acide Verbindungen wie beispielsweise Diethylmalonat.

Als freie Isocyanatgruppen enthaltende Polyisocyanatvernetzer B) sind beispielsweise organische Polyisocyanate mit aliphatisch, cycloaliphatisch, araliphatisch und/oder aromatisch gebundenen, freien Isocyanatgruppen, die bei Raumtemperatur flüssig sind, geeignet. Solche Polyisocyanatvernetzer B) weisen im Allgemeinen bei 23 °C eine rotations-viskosimetrisch bestimmte Viskosität von 50 bis 10.000, vorzugsweise von 50 bis 1.500 mPas auf.

Falls erforderlich, können die Polyisocyanate in Abmischung mit geringen Mengen an inerten Lösungsmitteln zum Einsatz gelangen, um die Viskosität auf einen Wert innerhalb der genannten Bereiche abzusenken.

Sehr gut geeignet sind beispielsweise "Lackpolyisocyanate" auf Basis von Hexamethylendiisocyanat oder von 1-Isocyanato-3,3,5-trimethyl-5-isocyanatomethylcyclohexan (IPDI) und/oder Dicyclohexylmethandiisocyanat. Unter "Lackpolyisocyanaten" auf Basis dieser Diisocyanate sind die an sich bekannten Biuret-, Urethan-, Allophanat-, Uretdionund/oder Isocyanuratgruppen aufweisenden Derivate dieser Diisocyanate zu verstehen, die im Anschluss an ihre Herstellung in bekannter Weise, vorzugsweise durch Destillation von überschüssigem Ausgangsdiisocyanat, bis auf einen Restgehalt von weniger 0,5 Gew.-% befreit worden sind. Zu den bevorzugten, erfindungsgemäß zu verwendenden, aliphatischen Polyisocyanaten gehören den obengenannten Kriterien entsprechende, Biuretgruppen aufweisende Polyisocyanate auf Basis von Hexamethylendiisocyanat, wie sie beispielsweise nach den Verfahren der US-Patentschriften 3 124 605, 3 903 126, 3 903 127 oder 3 976 622 erhalten werden können und die aus Gemischen von N,N',N"-Tris-(6-isocyanatohexyl)-biuret mit untergeordneten Mengen seiner höheren Homologen bestehen sowie die den genannten Kriterien entsprechenden cyclischen Trimerisate von Hexamethylendiisocyanat, wie sie gemäß US-PS 4 324 879 erhalten werden können und die im Wesentlichen aus N,N',N"-Tris-(6-isocyanatohexyl)-isocyanurat im Gemisch mit untergeordneten Mengen an seinen höheren Homologen bestehen.

Bei den erfindungsgemäß ebenfalls geeigneten, jedoch weniger bevorzugten aromatischen Polyisocyanaten handelt es sich insbesondere um "Lackpolyisocyanate" auf Basis von 2,4-Diisocyanatotoluol oder dessen technischen Gemischen mit 2,6-Diisocyanatololuol oder auf Basis von 4,4'-Diisocyanatodiphenylmethan bzw. dessen Gemischen mit seinen Isomeren und/oder höheren Homologen.

Ebenfalls geeignete Polyisocyanatvernetzer sind solche, die durch den Einbau von Polyether- und/oder Salzgruppen hydrophiliert sind, wie sie beispielsweise in DE-A-41 36 618 oder US-A-4 663 377 beschrieben sind.

Bevorzugte Vernetzerharze sind die vorstehend beschriebenen Polyisocyanatvernetzer mit freien Isocyanatgruppen, insbesondere hydrophilierte Vernetzer auf dieser Basis. Besonders bevorzugt handelt es sich bei der Polyisocyanatkomponente B) um solche Polyisocyanate oder Polyisocyanatgemische mit ausschließlich aliphatisch und/oder cycloaliphatisch gebundenen Isocyanatgruppen einer zwischen 2,2 und 5,0 liegenden (mittleren) NCO-Funktionalität und einer rotations-viskosimetrisch bestimmten Viskosität bei 23 °C von 50 bis 1.500 mPas.

In den erfindungsgemäßen Beschichtungsmitteln liegen im Allgemeinen, jeweils bezogen auf Feststoff, 50 bis 95, vorzugsweise 65 bis 90 Gew.-% der Hydroxylgruppen aufweisenden Komponente A) in Kombination mit 4 bis 50, vorzugsweise 5 bis 35 Gew.-% Vernetzer B) vor. Der Festkörpergehalt der Beschichtungsmittel liegt im Allgemeinen bei 35 bis 70 Gew.-%.

Die erfindungsgemäßen Beschichtungsmittel können selbstverständlich an sich bekannte Hilfs- und Zusatzmittel der Lacktechnologie enthalten. Hierzu gehören beispielsweise Entschäumungsmittel, Verdickungsmittel, Verlaufshilfsmittel, Pigmente, Mattierungsmittel, Dispergierhilfsmittel für die Pigmentverteilung und dergleichen.

Die erfindungsgemäßen Beschichtungsmittel, die Melaminharze oder blockierte Polyisocyanate als Vernetzerharze enthalten bzw. Beschichtungsmittel oder Dichtmassen auf Basis derartiger Bindemittelkombinationen, stellen in der Hitze vernetzbare Einkomponenten-Systeme dar, die bei Raumtemperatur lagerfähig sind. Entsprechende Systeme, die als Vernetzer Polyisocyanate mit freien Isocyanatgruppen enthalten, stellen Zweikomponenten-Systeme dar, die durch Abmischung der Einzelkomponenten erhalten werden und bei Raumtemperatur eine nur begrenzte Topfzeit aufweisen.

Zu den bevorzugten Anwendungsgebieten für die erfindungsgemäßen Polysiloxan-Polyurethan-Dispersionen gehört ihre Verwendung als Bindemittelkomponente in elastischen Lacken, Beschichtungs- und Dichtmassen, insbesondere in Soft-Feel-Lacken, beispielsweise für die Kunststoffbeschichtung und Automobilinnenlackierung. Die erfindungsgemäßen Polyester-Polyurethan-Dispersionen eignen sich jedoch auch als Bindemittelkomponente für wässrige Kunststoff-, Folien-, Leder-, Metall- oder Holzlacke sowie als Bindemittelkomponente zur Beschichtung von mineralischen Substraten.

Ebenfalls bevorzugte Anwendungsgebiete sind Release- oder Antihaftbeschichtungen sowie wasserdampfdurchlässige und/oder schmutzunempfindliche Beschichtungen.

Selbstverständlich kann bei der Formulierung der erfindungsgemäßen Beschichtungen auch mit anderen Bindemitteln, wie beispielsweise einem anionisch und/oder nichtionisch-hydrophil modifizierten, Hydroxylgruppen-freien PUR-Harz mit einer Molekularmasse Mw von mindestens 15.000, kombiniert werden.

Überraschenderweise konnte mit der erfindungsgemäßen Polysiloxan-Polyurethan-Dispersion Beschichtungen mit Softfeel Eigenschaften formuliert werden, ohne dass die Verwendung weiterer Bindemittel, wie beispielsweise die PUR-Dispersion 1) aus EP-B-0 669 352, oder die Haptik beeinflussender Feststoffe, notwendig ist.

(Sofern nicht anders angegeben, sind die Molekularmassen numerisch (Mₙ)).

### Ausführungsbeispiele:

In den nachfolgenden Beispielen beziehen sich alle Prozentangaben auf das Gewicht. Die pH-Werte wurden gemäß DIN 53 785 nach Verdünnen mit destilliertem Wasser auf einen Festkörpergehalt von 10 Gew.-% bestimmt.

### a) Herstellungsbeispiele:

### Beispiel 1 (erfindungsgemäß):

In einem Reaktionsgefäß mit Rühr-, Kühl- und Heizvorrichtung wurden 84,0 g des Polyesters Oxyester T1136 (Hydroxylgehalt ca. 3,2 %, Degussa AG), 24,0 g des Hydroxyalkyl-modifizierten Polydimethylsiloxans Tegomer®H-Si 2311 (Mw = 2.500 g/mol, Goldschmidt AG), 16,8 g 2,2-Bis(hydroxymethyl)propionsäure (DMPA) und 54,0 g N-Methylpyrrolidon (NMP) unter Stickstoff eingewogen, auf 60 °C aufgeheizt und homogenisiert.

Anschließend wurde 105,7 g Isophorondiisocyant (IPDI) und 0,2 g Dibutylzinndilaurat (DBTL) zugegeben und solange bei 90 °C gerührt (ca. 1 h), bis der theoretische Isocyanat-Gehalt von ca. 8 % erreicht war (Prepolymer (I)).

Zu dieser Reaktionsmischung wurde 12,0 g 1,4-Butandiol zugegeben und solange bei 90 °C gerührt (ca. 1 h), bis der theoretische Isocyanat-Gehalt von ca. 3,9 % erreicht war (Prepolymer (II)).

Anschließend wurde 27,6 g Trimethylolpropan (TMP) zugegeben und solange bei 120 bis 130 °C gerührt, bis keine NCO-Gruppen mehr nachweisbar waren.

Nach Abkühlen auf 100 °C wurden unter Rühren 10,1 g Triethlyamin (TEA) und 365,7 g Wasser zugegeben.

Man erhielt eine Polysiloxan-Polyurethan-Dispersion 1), welche einen Festkörpergehalt von 40 %, einen Hydroxylgruppengehalt von 1,8 % und einen Gehalt an organischen Lösemitteln von 7,5 % aufwies.

### Vergleichsbeispiel 1:

Die Herstellung erfolgte analog Beispiel 1) mit dem Unterschied, dass die Synthese gemäß EP-B-0 669 352 (Verfahren nach Beispiel 1)) in einem Schritt durch Umsetzung aller Polyolkomponenten mit dem Diisocyanat und Katalysator erfolgte, bis keine NCO-Gruppen mehr nachweisbar waren.

Man erhielt eine inhomogene Polysiloxan-Polyurethan-Dispersion 2), in der das Polysiloxan Tegomer®H-Si 2311 nicht vollständig einreagiert war.

### Vergleichsbeispiel 2:

Als Vergleichsbeispiel nach dem Stand der Technik wurde die Polyester-Polyurethan-Dispersion des Beispiels 1) aus EP-B-0 669 352 gewählt.

### b) Anwendungsbeispiele:

### Anwendungsbeispiel 1: (Erfindung)

50,0 g der Polysiloxan-Polyurethan-Dispersion 1), 3,0 g der Kieseläure TS 100 (Degussa AG), 3,0 g Mattierungsmittel Pergopak® M3 (Martinswerk, Bergheim), 0,3 g TEGO® Wet KL245 (Benetzungsadditiv, Tego Chemie Service), 0,5 g TEGO® Foamex 805 (Entschäumer, Tego Chemie Service), 1,0 g Acrysol RM8 (Verdicker, Rohm & Haas) und 42,2 g destilliertes Wasser wurden zusammen angerieben.

Anschließend wurden 10,0 g Isocyanatvernetzer Desmodur® N3300 (Bayer AG) unter Rühren einemulgiert.

Bei ca. 55 % relativer Luftfeuchte und 23 °C wurde der Lackfilm auf Glas- bzw. Kunststoffplatten appliziert, 10 Minuten bei Raumtemperatur und dann eine Stunde bei 80 °C gehärtet. Die Trockenfilmstärke betrug 50 µm.

Die Prüfung der Lackeigenschaften erfolgte nach Alterung der Filme (48 Stunden Raumtemperatur).

### Anwendungsbeispiel 2: (Vergleich)

Analog zu Anwendungsbeispiel 1), wobei statt der Polysiloxan-Polyurethan-Dispersion aus Beispiel 1) die Dispersion aus Vergleichsbeispiel 1) gewählt wurde.

### Anwendungsbeispiel 3: (Vergleich)

Nach dem Stand der Technik wurde Anwendungsbeispiel 1) EP-B-0 669 352 geprüft.

### Dabei wurden folgende Ergebnisse erhalten:

Die Filmoptik (Filmhomogenität, Einheitlichkeit des Mattierungsgrades, Pigmentbenetzung) der Anwendungsbeispiele 1 und 3 waren in Ordnung, der Film aus Anwendungsbeispiel 2 zeigte starke Lackfilmstörungen und konnte nicht getestet werden.

| Anwendungsbeispiel | Dispersion | Soft-Feel-Effekt ¹ | Haftung ² (Gitterschnitt) | Lösemittelbeständigkeit ³ |
|---|---|---|---|---|
| 1)* | 1) | 1 | 1 | 1/1/4/0 |
| 2)** | 2) | n.b. | n.b. | n.b. |
| 3)** | 3) | 2 | 1-2 | 1/1/4/0 |

| | | | | |
|---|---|---|---|---|
| * Erfindung ** Vergleich 1. Wert 0 = sehr guter Soft-Feel-Effekt, Wert 2 = guter Soft-Feel-Effekt, Wert 5 = kein Soft-Feel-Effekt 2. Gitterschnitt nach DIN 53230, Wert 0 = ausgezeichnete Haftung, Wert 2 = gute Haftung, Wert 5 = sehr schlechte Haftung 3. Belastung für 1 Minute mit einem Lösemittel enthaltendem Wattebausch durchgeführt, Lösemittel: (Superbenzin/Methoxypropylacetat/Xylol/Ethanol) Wert 0 = ohne Veränderung, Wert 5 = Lack abgelöst n.b. = nicht bestimmbar. | | | | |

Als besonderer Vorteil der erfindungsgemäßen Polysiloxan-Polyurethan-Dispersion aus Beispiel 1) ist weiterhin anzusehen, dass auch ohne die Verwendung von die Haptik beeinflussenden Mattierungsmitteln wie beispielsweise Pergopak® M3 oder Silitin® Z86 (Hoffmann & Söhne KG) ein ausgeprägter Soft-Feel-Effekt erreicht werden kann.

### Anwendungsbeispiel 4: (Erfindung)

50,0 g der Polysiloxan-Polyurethan-Dispersion 1), 3,0 g der Kieseläure TS 100 (Degussa AG), 3,0 g Mattierungsmittel Pergopak® M3 (Martinswerk, Bergheim), 0,3 g TEGO® Wet KL245 (Benetzungsadditiv, Tego Chemie Service), 0,5 g TEGO® Foamex 805 (Entschäumer, Tego Chemie Service), 1,0 g Acrysol® RM8 (Verdicker, Rohm & Haas) und 42,2 g destilliertes Wasser wurden zusammen angerieben.

Anschließend wurden 6,0 g Aminovernetzerharz Cymel® 327 (American Cyanamid) zugegeben.

Bei ca. 55 % relativer Luftfeuchte und 23 °C wurde der Lackfilm auf Glasplatten appliziert, 10 Minuten bei Raumtemperatur und dann 20 Minuten bei 150 °C gehärtet. Die Trockenfilmstärke betrug 50 µm.

Die Prüfung der Lackeigenschaften erfolgte nach Alterung der Filme (48 Stunden Raumtemperatur).

### Anwendungsbeispiel 5: (Vergleich)

Als Stand der Technik wurde eine mit Aminovernetzerharz formulierte Einbrennformulierung auf Basis einer Polyester-Polyurethan-Dispersion nach Anwendungsbeispiel 14) aus EP-B-0 669 352 gewählt.

### Folgende Eigenschaften wurden gefunden:

| Anwendungsbeispiel | Dispersion | Soft-Feel-Effekt ¹ | Haftung ² (Gitterschnitt) | Lösemittelbeständigkeit ³ |
|---|---|---|---|---|
| 4)* | 1) | 1-2 | 1 | 0/0/1/0 |
| 5)** | 3) | 2-3 | 1-2 | 0/0/1/0 |

| | | | | |
|---|---|---|---|---|
| * Erfindung ** Vergleich 1. Wert 0 = sehr guter Soft-Feel-Effekt, Wert 2 = guter Soft-Feel-Effekt, Wert 5 = kein Soft-Feel-Effekt 2. Gitterschnitt nach DIN 53230, Wert 0 = ausgezeichnete Haftung, Wert 2 = gute Haftung, Wert 5 = sehr schlechte Haftung 3. Belastung für 1 Minute mit einem Lösemittel enthaltendem Wattebausch durchgeführt, Lösemittel: (Superbenzin/Methoxypropylacetat/Xylol/Ethanol) Wert 0 = ohne Veränderung, Wert 5 = Lack abgelöst. | | | | |

Aus den Vergleichsbeispielen ging klar die Überlegenheit der erfindungsgemäßen Polysiloxan-Polyurethan-Dispersion sowie des erfindungsgemäßen Verfahrens zur Herstellung von Polysiloxan-Polyurethan-Dispersionen hervor.

## Patentansprüche

1. Wässrige Dispersionen von Polysiloxan-Polyurethanen mit einer Säurezahl von 5 bis 100 mg KOH/g Polysiloxan-Polyurethan-Feststoff, einem Gehalt an Hydroxylgruppen von 0,25 bis 6,5 Gew.-% und an Urethangruppen (berechnet als -NH-CO-O-) von 2,0 bis 25,0 Gew.-% jeweils bezogen auf Polysiloxan-Polyurethan-Feststoff, **dadurch gekennzeichnet, dass** die Polyurethane, ggf. zumindest teilweise mit Basen neutralisierte, Umsetzungsprodukte darstellen von
a) insgesamt 3 bis 25 Gew.-% mindestens eines linearen Polydimethylsiloxandiols der Molekularmasse 1.500 bis 10.000,
b) insgesamt 15 bis 90 Gew.-% mindestens eines weiteren linearen Polyols, ausgewählt aus der Gruppe bestehend aus
i) Hydroxylgruppen aufweisenden Polycarbonaten des Molekularmassenbereichs 400 bis 6.000,
ii) Hydroxylgruppen aufweisenden Polyetherpolyolen des Molekularmassenbereichs 350 bis 3.500
iii) Estergruppen aufweisenden, durch Hydrierung der Carboxylgruppen zu Hydroxylgruppen, Alkoxylierung der Carboxylgruppen oder Veresterung der Carboxylgruppen mit niedermolekularen Diolen von Dimerfettsäuren erhaltenen Polyesterpolyolen und
iiii) Hydroxylgruppen aufweisenden linearen Polyesterpolyolen des Molekularmassenbereichs 500 bis 4.000.
c) insgesamt 1 bis 10 Gew.-% wenigstens einer Säurekomponente, bestehend aus
i) Hydroxycarbonsäuren,
ii) Aminocarbonsäuren,
iii) Aminosulfonsäuren oder
iv) Alkalisalzen derartiger Säuren.
d) insgesamt 0 bis 20 Gew.-% wenigstens einer niedermolekularen Komponente, bestehend aus mindestens einer, mindestens zwei Hydroxyl- und/oder Aminogruppen enthaltenden Verbindung des Molekularmassenbereichs 60 bis 300,
e) insgesamt 0 bis 20 Gew.-% wenigstens eines hydrophilen, Ethylenoxideinheiten aufweisenden ein- oder mehrwertigen Alkohols des Molekularmassenbereichs 350 bis 3.000,
f) insgesamt 5 bis 50 Gew.-% wenigstens einer Polyisocyanatkomponente, bestehend aus mindestens einem organischen Polyisocyanat des Molekularmassenbereichs 168 bis 1.000, wobei mindestens 50 Gew.-% der Polyisocanatkomponente Diisocyanate des Molekularmassenbereichs 168 bis 300 darstellen,
wobei sich die genannten Prozentangaben zu 100 Gew.-% der Polyurethananteile der Polysiloxan-Polyurethan-Feststoffe ergänzen.

2. Wässrige Polysiloxan-Polyurethan-Dispersionen gemäß Anspruch 1, **dadurch gekennzeichnet, dass** die dispergierten Polysiloxan-Polyurethane eine Säurezahl von 8 bis 40 mg KOH/g Feststoff, einen Gehalt an Hydroxylgruppen von 0,5 bis 3,5 Gew.-% und an Urethangruppen von 4,0 bis 19,0 Gew.-% aufweisen und Umsetzungsprodukte von
5,0 bis 15,0 Gew.-% der Komponente a)
20,0 bis 70,0 Gew.-% der Komponente b)
2,0 bis 7,0 Gew.-% der Komponente c)
0,5 bis 10,0 Gew.-% der Komponente d)
0 bis 10,0 Gew.-% der Komponente e) und
7,0 bis 30,0 Gew.-% der Komponente f) darstellen,
wobei
das Polydimethylsiloxandiol
a) aus einem linearen, insbesondere α,ω-Dihydroxyalkyl-Polydimethylsiloxan der Molekularmasse im Bereich von 2.000 bis 4.000 besteht, die Komponente
b) aus einem linearen Polyesterdiol der Molekularmasse 500 bis 4.000 und/oder einem linearen Polycarbonatdiol der Molekularmasse 750 bis 4.000 besteht,
die Komponente
c) zumindest zu 85 Gew.-% aus 2,2-Dimethylolpropionsäure und/oder 2,2-Dimethylolbuttersäure besteht, die Komponente
d) aus mindestens einem niedermolekularen Diol und/oder Triol der Molekularmasse 90 bis 150 besteht und die Komponente
e) zumindest 75 Gew.-% aus cycloaliphatischen Diisocyanaten des Molekularmassenbereichs 166 bis 300 besteht,
wobei sich die zu a) bis f) gemachten Prozentangaben jeweils zu 100 Gew.-% der Polyurethananteile der Polysiloxan-Polyurethan-Feststoffe ergänzen.

3. Verfahren zur Herstellung der wässrigen Polysiloxan Polyurethan-Dispersionen gemäß Anspruch 1 oder 2 **dadurch gekennzeichnet, dass** man in einem ersten Schritt ein Isocyanat-funktionelles Prepolymer (I) aus den Komponenten a), b), c) und f) sowie d) und g), sofern jeweils anwesend, herstellt, wobei das NCO/OH-Verhältnis 1,8 : 1 bis 3,0 : 1 beträgt und dass das erhaltene Prepolymer (I) dann durch Umsetzung mit der Komponente d) zu einem Isocyanat-funktionellen Prepolymer (II) umsetzt, wobei das NCO/OH-Verhältnis 1,2 : 1 bis 1,6 : 1 beträgt, und dass man durch Reaktion mit weiterem Polyol als Komponente b) und/oder d) daraufhin zum finalen Hydroxylgruppen-haltigen Polysiloxan-Polyurethan-Polymer umsetzt, welches durch Zugabe in Wasser in Gegenwart des Neutralisationsmittels dispergiert wird.

4. Verwendung der wässrigen Polyester-Polysiloxan-Dispersionen gemäß Anspruch 1 oder 2 zur Herstellung von wässrigen Beschichtungsmitteln auf Basis von in Wasser dispergierten Bindemitteln und Vernetzerharzen, ausgewählt aus der Gruppe bestehend aus Aminoplastharzen, gegebenenfalls hydrophil modifizierten blockierten Polyisocyanaten und gegebenenfalls hydrophil modifizierten Polyisocyanaten mit freien Isocyanatgruppen.

5. Wässriges, gegebenenfalls übliche Hilfs- und Zusatzstoffe enthaltendes Beschichtungsmittel, welches als Bindemittel eine Kombination aus
A) einer Polyolkomponente mit
B) einem Vernetzerharz, ausgewählt aus der Gruppe bestehend aus Melaminharzen, gegebenenfalls hydrophil modifizierten blockierten Polyisocyanaten und gegebenenfalls hydrophil modifizierten Polyisocyanaten mit freien Isocyanatgruppen, enthält, **dadurch gekennzeichnet, dass** die Polyolkomponente A) 25 bis 100 Gew.-% eines Hydroxylgruppen aufweisenden Polysiloxan-Polyurethans gemäß Anspruch 1 oder 2 in Wasser dispergiert und 0 bis 75 Gew.-% aus anderen, von diesen Polysiloxan-Polyurethanen verschiedenen Bindemitteln besteht.

6. Beschichtungsmittel gemäß Anspruch 5, **dadurch gekennzeichnet, dass** die Polyolkomponente A) 80 bis 100 Gew.-% Hydroxylgruppen aufweisenden Polysiloxan-Polyurethans gemäß Anspruch 1 oder 2 in Wasser dispergiert und 0 bis 20 Gew.-% aus anderen, von diesen Polysiloxan-Polyurethanen verschiedenen Bindemitteln besteht.

## Claims

1. Aqueous dispersions of polysiloxane-polyurethanes having an acid number of from 5 to 100 mg KOH/g polysiloxane-polyurethane solids, a hydroxyl group content of from 0.25 to 6.5% by weight, and a urethane group content (calculated as -NH-CO-O-) of from 2.0 to 25.0% by weight, based in each case on polysiloxane-polyurethane solids, **characterized in that** the polyurethanes are products, where appropriate at least partly neutralized with bases, of the reaction of
a) a total of from 3 to 25% by weight of at least one linear polydimethylsiloxanediol of the molecular mass range 1,500 to 10,000,
b) a total of from 15 to 90% by weight of at least one further linear polyol, selected from the group consisting of
i) hydroxyl-containing polycarbonates of the molecular mass range 400 to 6,000,
ii) hydroxyl-containing polyetherpolyols of the molecular mass range 350 to 3,500,
iii) ester-functional polyesterpolyols obtained from dimer fatty acids by hydrogenating the carboxyl groups to hydroxyl groups, alkoxylating the carboxyl groups or esterifying the carboxyl groups with low molecular mass diols, and
iiii) hydroxyl-containing linear polyesterpolyols of the molecular mass range 500 to 4,000,
c) a total of from 1 to 10% by weight of at least one acid component composed of
i) hydroxycarboxylic acids,
ii) aminocarboxylic acids,
iii) aminosulfonic acids or
iv) alkali metal salts of such acids,
d) a total from 0 to 20% by weight of at least one low molecular mass component composed of at least one compound containing at least two hydroxyl and/or amino groups, of the molecular mass range 60 to 300,
e) a total of from 0 to 20% by weight of at least one hydrophylic monohydric or polyhydric alcohol containing ethylene oxide units, of the molecular mass range 350 to 3,000,
f) a total of from 5 to 50% by weight of at least one polyisocyanate component composed of at least one organic polyisocyanate of the molecular mass range 168 to 1,000, at least 50% by weight of the polyisocyanate component comprising diisocyanates of the molecular mass range 168 to 300,
the stated percentages adding up to 100% by weight of the polyurethane fractions of the polysiloxane-polyurethane solids.

2. Aqueous polysiloxane-polyurethane dispersions according to Claim 1, **characterized in that** the dispersed polysiloxane-polyurethanes have an acid number of from 8 to 40 mg KOH/g solids, a hydroxyl group content of from 0.5 to 3.5% by weight, and a urethane group content of from 4.0 to 19.0% by weight and constitute products of the reaction of
from 5.0 to 15.0% by weight of component a)
from 20.0 to 70.0% by weight of component b)
from 2.0 to 7.0% by weight of component c)
from 0.5 to 10.0% by weight of component d)
from 0 to 10.0% by weight of component e) and
from 7.0 to 30.0% by weight of component f),
the polydimethylsiloxanediol
a) being composed of a linear, especially α,ω-dihydroxyalkyl-polydimethylsiloxane of molecular mass in the range from 2,000 to 4,000,
component
b) being composed of a linear polyesterdiol of molecular mass 500 to 4,000 and/or a linear polycarbonatediol of molecular mass 750 to 4,000,
component
c) being composed of at least 85% by weight of 2,2-dimethylolpropionic acid and/or 2,2-dimethylolbutyric acid, component
d) being composed of at least one low molecular mass diol and/or triol of molecular mass 90 to 150, and component
e) being composed of at least 75% by weight of cycloaliphatic diisocyanates of the molecular mass range 166 to 300,
the percentages given for a) to f) adding up in each case to 100% by weight of the polyurethane fractions of the polysiloxane-polyurethane solids.

3. Process for preparing the aqueous polysiloxane-polyurethane dispersions according to Claim 1 or 2, **characterized in that**, in a first step, an isocyanate-functional prepolymer (I) is prepared from components a), b), c), and f) and also d) and g) where present in each case, the NCO/OH ratio being from 1.8 : 1 to 3.0 : 1, and **in that** the resulting prepolymer (I) is converted into an isocyanate-functional prepolymer (II) by reaction with component d), the NCO/OH ratio being from 1.2 : 1 to 1.6 : 1, and **in that** the product is converted subsequently by reaction with further polyol as component b) and/or d), to give the final hydroxyl-containing polysiloxane-polyurethane polymer, which is dispersed by addition to water in the presence of a neutralizing agent.

4. Use of the aqueous polyester-polysiloxane dispersions according to Claim 1 or 2 for preparing aqueous coating compositions based on water-dispersed binders and crosslinker resins selected from the group consisting of amino resins, optionally hydrophilically modified blocked polyisocyanates, and optionally hydrophilically modified polyisocyanates having free isocyanate groups.

5. Aqueous coating composition, comprising where appropriate customary auxiliaries and additives and comprising as binder a combination of
A) a polyol component with
B) a crosslinker resin selected from the group consisting of melamine resins, optionally hydrophilically modified blocked polyisocyanates, and optionally hydrophilically modified polyisocyanates having free isocyanate groups, wherein from 25 to 100% by weight of the polyol component A) is composed of a hydroxyl-containing polysiloxane-polyurethane as set forth in claim 1 or 2 in dispersion in water and 0 to 75% by weight of the polyol component A) is composed of binders other than these polysiloxane-polyurethanes.

6. Coating composition according to Claim 5, **characterized in that** from 80 to 100% by weight of the polyol component A) is composed of hydroxyl-containing polysiloxane-polyurethanes according to Claim 1 or 2 in dispersion in water and from 0 to 20% by weight is composed of binders other than said polysiloxane-polyurethanes.

## Revendications

1. Dispersions aqueuses de polysiloxane-polyuréthanes présentant un indice d'acide de 5 à 100 mg de KOH/g de polysiloxane-polyuréthane solide, une teneur en groupes hydroxyle de 0,25 à 6,5% en poids et en groupes uréthane (calculés sous forme de -NH-CO-O-) de 2,0 à 25,0% en poids à chaque fois par rapport au polysiloxane-polyuréthane solide, **caractérisées en ce que** les polyuréthanes sont des produits de transformation, le cas échéant au moins partiellement neutralisés avec des bases, de
a) au total 3 à 25% en poids d'au moins un polydiméthylsiloxanediol linéaire de masse moléculaire 1 500 à 10 000,
b) au total 15 à 90% en poids d'au moins un autre polyol linéaire, choisi dans le groupe constitué par
i) les polycarbonates présentant des groupes hydroxyle de la plage des masses moléculaires de 400 à 6 000,
ii) les polyétherpolyols présentant des groupes hydroxyle de la plage de masses moléculaires de 350 à 3 500,
iii) les polyesterpolyols présentant des groupes ester, obtenus par hydrogénation des groupes carboxyle en groupe hydroxyle, alcoxylation des groupes carboxyle ou estérification des groupes carboxyle avec des diols de bas poids moléculaire d'acides gras dimères et
iiii) les polyesterpolyols linéaires présentant des groupes hydroxyle de la plage des masses moléculaires de 500 à 4 000,
c) au total 1 à 10% en poids d'au moins un composant acide, constitué par
i) des acides hydroxycarboxyliques,
ii) des acides aminocarboxyliques,
iii) des acides aminosulfoniques ou
iv) des sels de métal alcalin de ces acides,
d) au total 0 à 20% en poids d'au moins un composant de bas poids moléculaire, constitué par au moins un composé, contenant au moins deux groupes hydroxyle et/ou amino, de la plage de masses moléculaires 60 à 300,
e) au total 0 à 20% en poids d'au moins un alcool hydrophile, présentant des unités d'oxyde d'éthylène, monovalent ou polyvalent, de la plage de masses moléculaires de 350 à 3 000,
f) au total 5 à 50% en poids d'au moins un composant polyisocyanate, constitué par au moins un polyisocyanate organique de la plage de masses moléculaires 168 à 1 000, au moins 50% en poids du composant polyisocyanate représentant des diisocyanates de la plage des masses moléculaires de 168 à 300,
les indications en % mentionnées se complétant à 100% en poids des proportions de polyuréthane des polysiloxane-polyuréthanes solides.

2. Dispersions aqueuses de polysiloxane-polyuréthane selon la revendication 1, **caractérisées en ce que** les polysiloxane-polyuréthanes dispersés présentent un indice d'acide de 8 à 40 mg de KOH/g de solide, une teneur en groupes hydroxyle de 0,5 à 3,5% en poids et en groupes uréthane de 4,0 à 19,0% en poids et représentent des produits de transformation de
5,0 à 15,0% en poids du composant a)
20,0 à 70,0% en poids du composant b)
2,0 à 7,0% en poids du composant c)
0,5 à 10,0% en poids du composant d)
0 à 10,0% en poids du composant e) et
7,0 à 30,0% en poids du composant f) où
le polydiméthylsiloxanediol
a) est constitué par un polydiméthylsiloxane linéaire, en particulier un α,ω-dihydroxyalkyl-polydiméthylsiloxane de masse moléculaire dans la plage de 2 000 à 4 000,
le composant
b) est constitué par un polyesterdiol linéaire de masse moléculaire 500 à 4 000 et/ou un polycarbonatediol linéaire de masse moléculaire de 750 à 4 000,
le composant
c) est constitué jusqu'au moins 85% en poids d'acide 2,2-diméthylolpropionique et/ou d'acide 2,2-diméthylolbutyrique,
le composant
d) est constitué par au moins un diol et/ou un triol de bas poids moléculaire présentant une masse moléculaire de 90 à 150 et
le composant
e) est constitué par au moins 75% en poids de diisocyanates cycloaliphatiques de la plage des masses moléculaires de 166 à 300,
où les indications en % indiquées pour a) à f) se complètent à chaque fois à 100% en poids des proportions de polyuréthane des polysiloxane-polyuréthanes solides.

3. Procédé pour la préparation des dispersions aqueuses de polysiloxane-polyuréthane selon la revendication 1 ou 2 **caractérisé en ce qu'**on prépare, dans une première étape, un prépolymère (I) à fonctionnalité isocyanate à partir des composants a), b), c) et f) ainsi que d) et g), pour autant qu'ils soient présents, le rapport NCO/OH étant de 1,8:1 à 3,0:1 et on transforme ensuite le prépolymère (I) obtenu par transformation avec le composant d) en un prépolymère (II) à fonctionnalité isocyanate, le rapport NCO/OH étant de 1,2:1 à 1,6:1 et on transforme ensuite par réaction avec un autre polyol que le composant b) et/ou d) en polymère de polysiloxane-polyuréthane final contenant des groupes hydroxyle qui est dispersé par addition dans l'eau en présence d'un agent de neutralisation.

4. Utilisation des dispersions aqueuses de polyester-polysiloxane selon la revendication 1 ou 2 pour la préparation d'agents aqueux de revêtement à base de liants dispersés dans l'eau et de résines de réticulation dispersées dans l'eau, choisies dans le groupe des résines aminoplastiques, des polyisocyanates bloqués le cas échéant modifiés de manière hydrophile et des polyisocyanates avec des groupes isocyanate libres le cas échéant modifiés de manière hydrophile.

5. Agent aqueux de revêtement, contenant le cas échéant des adjuvants et des additifs usuels qui contient comme liant une combinaison de
A) un composant polyol avec
B) une résine de réticulation, choisie dans le groupe constitué par les résines de mélamine, les polyisocyanates bloqués le cas échéant modifiés de manière hydrophile et les polyisocyanates avec des groupes isocyanate libres le cas échéant modifiés de manière hydrophile, **caractérisé en ce que** le composant polyol A) est constitué par 25 à 100% en poids d'un polysiloxane-polyuréthane présentant des groupes hydroxyle selon la revendication 1 ou 2 dispersé dans l'eau et par 0 à 75% en poids d'autres liants, différents de ces polysiloxane-polyuréthanes.

6. Agent de revêtement selon la revendication 5, **caractérisé en ce que** le composant polyol A) est constitué par 80 à 100% en poids de polysiloxane-polyuréthane présentant des groupes hydroxyle selon la revendication 1 ou 2 dispersé dans l'eau et par 0 à 20% en poids d'autres liants différents de ces polysiloxane-polyuréthanes.
